# EUROPÄISCHE PATENTANMELDUNG

(11) **EP 2 607 040 A1**
(43) Veröffentlichungstag der Anmeldung: **26.06.2013**
(21) Anmeldenummer: 12197511.4
(22) Anmeldetag: 17.12.2012
(51) Int. Cl.: B29C 33/00, B29C 45/26, B29C 45/27, B29C 67/24

(54) **Verfahren zur Herstellung von mehreren Spritzgussteilen**

(30) Priorität: 22.12.2011 AT 500182011
(71) Anmelder: Elast Kunststoffverarbeitungs-GmbH & Co. KEG, 4730 Heiligenberg (AT)
(72) Erfinder: Manigatter, Kurt, 4072 ALKOVEN (AT); Adlesgruber, Karl, 4511 ALLHAMING (AT); Fattinger, Paul, 4730 HEILIGENBERG (AT); Reslhuber, Christian, 4491 NIEDERNEUKIRCHEN (AT)
(74) Vertreter: Babeluk, Michael

(57) **Zusammenfassung**

Die Erfindung betrifft ein Verfahren zur Herstellung von mehreren Spritzgussteilen aus fluiden Kunststoffen, die sich bei höheren Temperaturen verfestigen, oder aus vulkanisierenden, elastomeren Materialen, wie etwa Silikone oder Kautschuk, mit folgenden Schritten:
- Schließen einer Form aus zumindest zwei korrespondierenden Formplatten (1);
- Einspritzen von Kunststoff über mindestens eine Anspritzdüse (2);
- wobei der Kunststoff der Reihe nach durch düsenartige Übergänge (7) zwischen den Formnestern (3) von einem Formnest (3) in das nächste gepresst wird und von einem letzten Formnest (3) über einen weiteren Übergang (8) in die verlorene Kavität (4) gepresst wird;
- und wobei die verlorene Kavität (4) den überschüssigen Kunststoff und die vor dem Einspritzen in den Formnestern (3) vorhandene Luft aufnimmt.

## Beschreibung

Die vorliegende Erfindung betrifft ein Verfahren zur Herstellung von mehreren Spritzgussteilen aus fluiden Kunststoffen, die sich bei höheren Temperaturen verfestigen, oder aus vulkanisierenden, elastomeren Materialen, wie etwa Silikone oder Kautschuk. Insbesondere bezieht sich die Erfindung auf ein Spritzgussverfahren für wärmehärtbare Kunststoffe, bei dem über eine Anspritzdüse mehrere Spritzgussteile in einem Arbeitsgang herstellbar sind.

Wärmehärtbare Materialien im Sinne der Erfindung sind im Wesentlichen fluide Kunststoffe, die sich bei höheren Temperaturen verfestigen, oder vulkanisierende, elastomere Materialen, wie etwa Silikone oder Kautschuk. Solche fluiden Kunststoffe werden bei der Verarbeitung bei niedriger Temperatur über eine Spritzgussdüse in ein Formnest gespritzt und vulkanisieren dort unter Wärmeeinfluss zum gewünschten Spritzgussteil aus.

Es ist bekannt solche Spritzgussteile so herzustellen, dass die Nachbearbeitung im Bereich der Angussstelle der Spritzgussteile und/oder an Teilungsebene der Formhälften erforderlich ist. Entsprechende Verfahren und zugehörige Vorrichtungen sind u.a. in der US 2,883,704, der US 3,070,843 und der JP OS 48-72258 beschrieben.

Weiters sind Formvorrichtungen zur Erzeugung angussfreier geformter Teile als Folge einer genauen Oberflächenberührung eines Paares von Formteilen bekannt, welche ein Formnest bilden. Aus der US 3,121,918 ist eine Formvorrichtung bekannt, bei welcher eine Kammer auf einer oberen Fläche einer unteren Heizplatte angeordnet ist. Eine obere Fläche der Kammer ist durch eine Membran überdeckt. Eine wärmebeständige Flüssigkeit wird in die Kammer eingefüllt und unter Druckbeaufschlagung gehalten. Die Membran wird durch das unter Druck stehende Fluid ausgelenkt und hält auf diese Weise eine sehr dichte Berührung zwischen den benachbarten Formen. Hier können ein oder mehrere Hohlräume in der Formvorrichtung vorgesehen sein zur Erzeugung angussfreier Teile. Nach der Lehre aus dieser Druckschrift ist jedoch die Herstellung angussfreier Teile dann nicht möglich, wenn in der Formvorrichtung viele Hohlräume vorgesehen sind.

Um hier Abhilfe zu schaffen, beschreibt die DE 31 07 865 A eine Formvorrichtung zur Erzeugung einer Vielzahl von angussfrei geformten, bzw. gratfreien Kunststoffteilen, bei welchen das aus einer Spritzdüse austretende, wärmehärtbare Material auf mehrere, nebeneinander angeordneten Formnester aufgeteilt wird. Die Formvorrichtung umfasst ein oberes Halteelement zum Fixieren zumindest einer oberen Form mit einem Kanal, in welchen ein formbares Material eingeleitet wird und ein unteres Halteelement zum Fixieren zumindest einer unteren Form mit einem Hohlraum, wobei eine bestimmte Menge eines Fluids zwischen eine Bodenfläche der unteren Form und das untere Halteelement eingefüllt wird. Auf diese Weise schwimmt die untere Form auf dem Fluid und ist längs des unteren Halteelements beweglich. Nach der Herstellung einer Oberflächenberührung zwischen der Bodenfläche der oberen Form und der oberen Fläche der unteren Form ergibt sich eine präzise gegenseitige Anlage infolge des Rückdrucks des Fluids. Auf diese Weise lässt sich eine Mehrzahl von angussfreien Teilen in nebeneinander angeordneten Formnestern gleichzeitig anspritzen.

Nachteilig bei allen diesen Vorrichtungen ist jedoch, dass die Formnester alle nebeneinander angeordnet sein müssen.

Aus der EP 68 615 B ist eine Form mit hintereinander angeordneten Formnestern bekannt, wobei diese jedoch nach dem Schließen der Form voneinander getrennt sind. Das Einspritzen muss daher bei teilweise göffneter Form erfolgen. Grate können auf diese nicht verhindert werden. Insbesondere müssen aufwendige Maßnahmen zur Abfuhr überschüssigen Materials vorgesehen werden.

Die JP 7-314499 A zeigt eine Form, bei der das Fomnest nach außen geöffnet ist, um eine sichere Füllung des Fomnests zu gewährleisten ohne das Risiko des Austretens überschüssigen Materials einzugehen.

Die vorliegende Erfindung stellt sich daher die Aufgabe, ein Werkzeug zur gleichzeitigen, angussfreien Herstellung einer Vielzahl von wärmehärtbaren Spritzgussteilen zu schaffen, bei dem mehrere hintereinander angeordnete Formnester über eine Spritzgussdüse kontinuierlich mit dem wärmehärtbaren Kunststoff gefüllt werden können.

Diese Aufgabe wird dadurch gelöst, dass folgende Schritten ausgeführt werden:
- Schließen einer Form aus zumindest zwei korrespondierenden Formplatten, die mehrere die Kontur der fertigen Produkte definierende Formnester und eine verlorene Kavität ausbilden;
- Einspritzen von Kunststoff über mindestens eine Anspritzdüse in der Form einer Kaltkanaldüse oder einer vergleichbaren Anspritzdüse in ein Formnest;
- wobei der Kunststoff der Reihe nach durch düsenartige Übergänge zwischen den Formnestern von einem Formnest in das nächste gepresst wird und von einem letzten Formnest über einen weiteren Übergang in die verlorene Kavität gepresst wird;
- und wobei die verlorene Kavität den überschüssigen Kunststoff und die vor dem Einspritzen in den Formnestern vorhandene Luft aufnimmt.

Wesentlich an der vorliegenden Erfindung ist, dass die einzelnen Formennester nacheinander durchströmt werden, wobei der eingespritzte Kunststoff aufgrund seiner relativ niedrigen Temperaturen eine sehr geringe Viskosität aufweist. Es ist dabei auch wesentlich, dass die Übergänge zwischen den einzelnen Formennester einen relativ geringen Querschnitt aufweisen, denn der Größenordnung des Querschnitts der Anspritzdüse ist. Die gesamte in den Formennester vor dem Einspritzen vorliegende Luft wird über einen Übergang vom letzten Formennester in die verlorene Kavität hinein gedrückt und verbleibt während des Eingespritzvorgangs dort. Je nachdem wie stark die Evakuierung vor dem Einspritzen durchgeführt worden ist, kann dabei ein Überdruck in der verlorenen Qualität entstehen.

Es ist in bevorzugter Weise auch möglich, dass eine oder mehrere Anspritzdüsen vorgesehen sind, die bevorzugt nebeneinander angeordnet sind, wovon jede Anspritzdüse eine Reihe von in Serie angeordneten Formnestern nacheinander mit der wärmehärtbaren Spritzgussmasse befüllt und wobei der Übergang zwischen zwei benachbarten Formnestern abhängig von der Geometrie der fertigen Produkte eine Breite von etwa 0,5 mm bis 5 mm, bevorzugt eine Breite von 0,5 mm bis 2 mm, eine Tiefe von wenigen hundertstel Millimetern und eine Länge von wenigen hundertstel Millimetern aufweist und das letzte Formnest an eine sogenannte verlorene Kavität anschließt. Die Formnester, die die Kontur der fertigen Produkte definieren, werden aus zwei relativ zueinander beweglichen Formplatten gebildet.

Es ist ein wichtiger Aspekt der vorliegenden Erfindung, dass wie oben ausgeführt die Übergänge zwischen den Formnestern einen möglichst geringen Querschnitt aufweisen. Dadurch wird sichergestellt, dass ein Formennester nach dem anderen vollständig gefüllt wird, bis schließlich nach Füllung des letzten Formnests eine geringe Materialmenge in die verlorene Kavität eintritt. Die vor Beginn des Eingespritzvorgangs in den Formnestern vorliegende Luft wird in die verlorene Kavität gepresst.

Die Erfindung wird nachstehend anhand der Figuren näher erläutert. Darin zeigt:
- Fig. 1: eine Schrägansicht auf eine erfindungsgemäße Formplatte im geöffneten Zustand;
- Fig. 2: ein Detailausschnitt der Formplatte aus Fig. 1 in Aufsicht;
- Fig. 3: einen senkrechten Schnitt durch zwei geschlossene Formplatten gemäß Fig. 1 mit der Spitze der Anspritzdüse und einer Reihe von Kavitäten, die über diese Anspritzdüse mit Spritzgussmasse beaufschlagt werden;
- Fig. 4: eine vergrößerte Ansicht des Schnittes nach Fig. 3 im Bereich der Düsenspitze;
- Fig. 5: eine weitere Teilansicht der Formplatte.

In den Figuren ist auf Formplatten zur Erzeugung von Plättchen Bezug genommen. Es versteht sich jedoch von selbst, dass auch andere Spritzgussteile, welche auf diese Art hergestellt werden können, unter die vorliegende Erfindung fallen. Die Übertrittsgeometrie ist dabei abhängig von der Geometrie der herzustellenden Formteile.

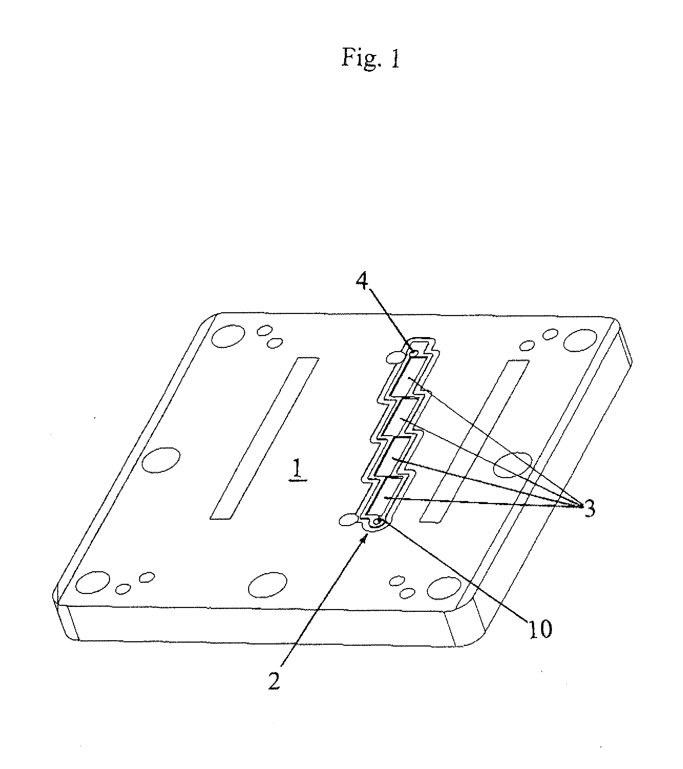

Die Formplatte 1 nach Fig. 1 weist auf der Unterseite mindestens einen, bevorzugt jedoch eine Vielzahl von Sitzen für Anspritzdüsen 2 auf, wobei jeder Anspritzdüse 2 mehrere hintereinander angeordnete Formnester 3 für die herzustellenden Spritzgussteile zugeordnet sind. Je nach Geometrie der Spritzgussteile und der Formplatte können mehr oder weniger Formnester über eine Anspritzdüse beaufschlagt werden.

In der Fig. 1 ist exemplarisch vorgesehen, dass nur eine Reihe Formnestern 3 von einer Anspritzdüse 2, welche in einem entsprechenden Düsensitz anliegt, mit der Spritzgussmasse befüllt werden. Mit der in Fig. 1 dargestellten Formplatte lassen sich somit über 1 Anspritzdüse in einem Arbeitsgang 4 Plättchen gleichzeitig herstellen. Am Ende jeder Reihe von Formnestern 3 befindet sich ein Durchtritt zu einer verlorenen Kavität 4. Es versteht sich jedoch von selbst, dass auch mehrere Sitze für Anspritzdüsen 2 vorgesehen sein können, denen jeweils eine Reihe von in Serie angeordneten Formnestern 3 zugeordnet sind.

Je nach Geometrie des herzustellenden Produktes kann die Anzahl der Anspritzdüsen in einem weiten Bereich variieren und können die Anspritzdüsen beliebig angeordnet sein, ebenso kann die Zahl an Formnestern, welche über eine Anspritzdüse mit der Spritzgussmasse beaufschlagt werden variieren.

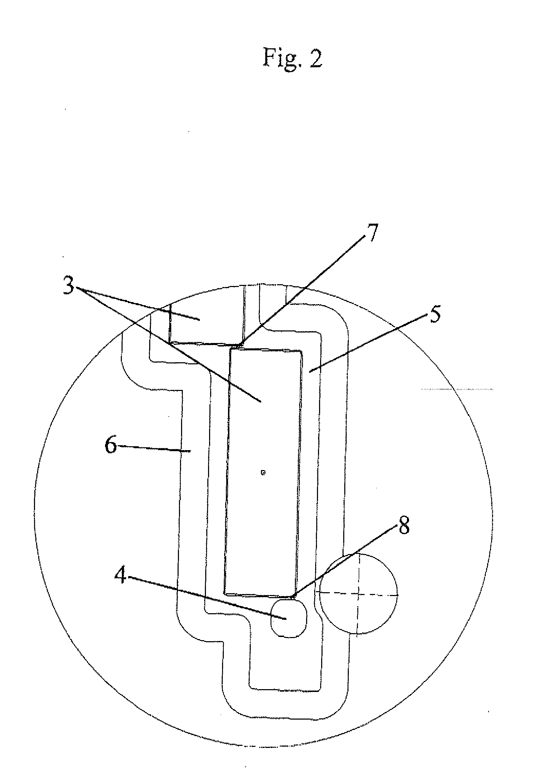

Im Detailausschnitt der Fig. 2 ist der Übergang 7 zwischen benachbarten Formnestern 3 und der Übergang 8 zur verlorenen Kavität 4 vergrößert dargestellt. In einer bevorzugten Ausführung der Erfindung sind die Auflageflächen 5 zweier Formplatten von freigestellten Flächen 6 umgeben, aus denen ein Teil des Formplattenmaterials beispielsweise durch Fräsung oder Senkerosion oder in anderer geeigneter Weise abgetragen ist. Dadurch erhöht sich beim Anpressen zweier Formplatten die Dichtheit der Auflageflächen 5 zwischen den Formplatten 1. Die Übergänge 7 und 8 sind dabei so dimensioniert, dass bei den vorgegebenen Spritzgussbedingungen eine zuverlässige Füllung aller in Reihe angeordneten Formnester und zumindest eine Teilfüllung der verlorenen Kavität 4 gewährleistet ist und sich die Produkte beim auseinander Bewegen der beiden Formplatten und Ablösen der Spritzgussteile in an sich bekannter Art die einzelnen Spritzgussteile voneinander abtrennen und keinen mit freiem Auge sichtbaren Anguss aufweisen.

Im dargestellten Fall einer Formplatte zur Herstellung von Plättchen aus Silikon haben die Übergänge 7 und 8 beispielsweise eine Breite von etwa 1,8 mm, eine Tiefe von 0,05 mm und eine Länge von 0,05 mm. Je nach Art des Spritzgussmaterials, der Geometrie des herzustellenden Produkts und der vorgegebenen Arbeitsbedingungen der Spritzgussanlage können die Dimensionen der Übergänge 7 und 8 eine Breite von 0,5 mm bis 5 mm, eine Tiefe von 0,01 mm bis 0,1 mm und eine Länge von 0,01 mm bis 0,1 mm aufweisen.

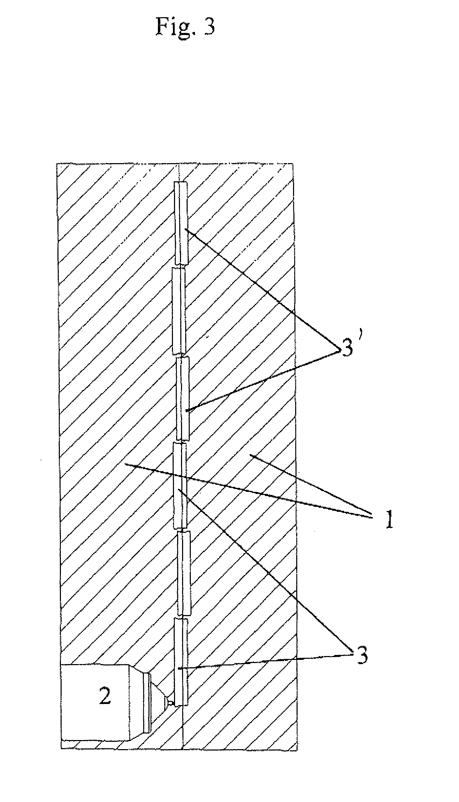

In einer weiteren bevorzugten Ausführung der Erfindung, dargstellt in Fig. 3, befinden sich die nebeneinander liegenden Formnester 3 und 3' nicht zu gleichen Teilen aufgeteilt in den beiden Formplatten, sondern die benachbarten Formnester 3 und 3' sind geringfügig senkrecht zueinander versetzt angeordnet, wobei in einer ersten Formplatte 1 das Formnest 3 tiefer und das benachbarte Formnest 3' höher liegt als es der Hälfte seines Volumens entsprechen würde, in der korrespondierenden Formplatte 1 sind diese Verhältnisse umgedreht. Dabei trennen sich die einzelnen Teile voneinander, sobald die Formplatten geöffnet werden und werden in bekannter Weise aus den Formplatten heraus gelöst.

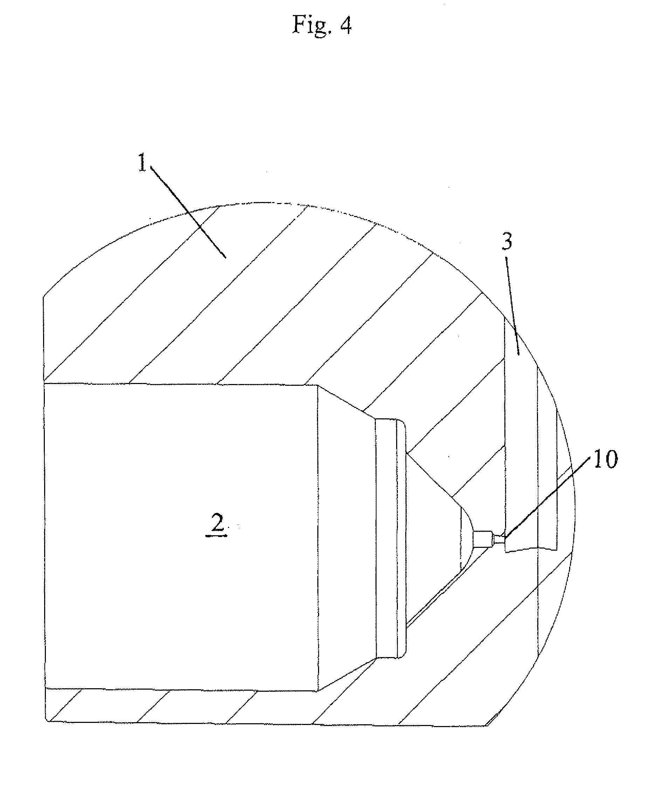

Fig. 4 zeigt einen vergrößerten Ausschnitt des Schnittes durch die Formplatte aus Fig. 3. Hier gut erkennbar ist eine weitere vorteilhafte Ausgestaltung der erfindungsgemäßen Vorrichtung, bei der das erste Formnest angussfrei seitlich angespritzt wird, beispielsweise über eine aus der EP 1 477 292 bekannten Kaltkanalspritzgussdüse oder eine ähnliche Spritzgussdüse. Es ist aber auch möglich, das erste Formnest angussfrei zentral anzuspritzen.

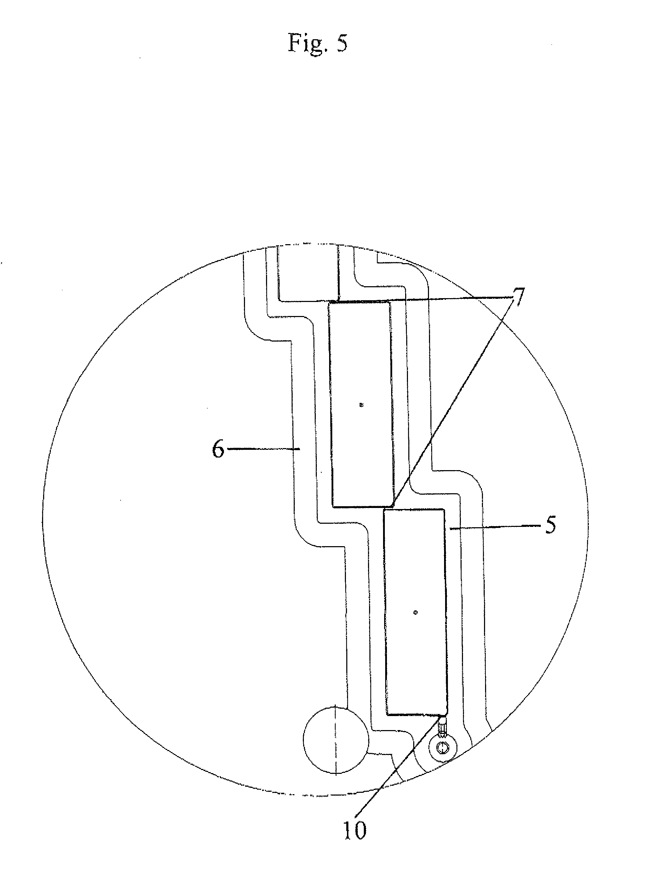

Fig. 5 zeigt einen weiteren Detailausschnitt der Formplatte 1 aus Fig. 1. Auch hier werden über die Anspritzstelle 10 nacheinander alle Formnester 3 befüllt, wobei die Übergänge 7 den Durchtritt der Spritzgussmasse von einem Formnest 3 zum nächsten Formnest 3 ermöglichen. Es versteht sich von selbst, dass die seitliche Versetzung der einzelnen Formnester 3 nur eine mögliche Variante darstellt. Auch hier kann die Auflagefläche 5 von einer freigestellten Fläche 6 umgeben sein, um die Dichtheit zwischen den Auflageflächen 5 zu erhöhen.

Der Vorteil der Erfindung ist darin zu sehen, dass über eine Anspritzdüse nacheinander mehrere Formnester befüllt werden können und sich die einzelnen Spritzgussteile beim Öffnen der Formplatten voneinander praktisch angussfrei trennen lassen. Nach der Evakuierung der Formnester eventuell noch vorhandene Restluft sammelt sich in der verlorenen Kavität 4, wodurch eine gleichbleibend hohe Qualität der Spritzgussteile erzielbar ist. Gleichzeitig verringert sich der apparative Aufwand, da die Anzahl der Anspritzdüsen erheblich reduziert werden kann bei gleichzeitig erhöhter Anzahl an herstellbaren Spritzgussteilen pro Arbeitsschritt.

## Patentansprüche

1. Verfahren zur Herstellung von mehreren Spritzgussteilen aus fluiden Kunststoffen, die sich bei höheren Temperaturen verfestigen, oder aus vulkanisierenden, elastomeren Materialen, wie etwa Silikone oder Kautschuk, mit folgenden Schritten:
- Schließen einer Form aus zumindest zwei korrespondierenden Formplatten (1), die mehrere die Kontur der fertigen Produkte definierende Formnester (3) und eine verlorene Kavität (4) ausbilden;
- Einspritzen von Kunststoff über mindestens eine Anspritzdüse (2) in der Form einer Kaltkanaldüse oder einer vergleichbaren Anspritzdüse in ein Formnest (3);
- wobei der Kunststoff der Reihe nach durch düsenartige Übergänge (7) zwischen den Formnestern (3) von einem Formnest (3) in das nächste gepresst wird und von einem letzten Formnest (3) über einen weiteren Übergang (8) in die verlorene Kavität (4) gepresst wird;
- und wobei die verlorene Kavität (4) den überschüssigen Kunststoff und die vor dem Einspritzen in den Formnestern (3) vorhandene Luft aufnimmt.

2. Verfahren nach Anspruch 1, **dadurch gekennzeichnet, dass** das Einspritzen über mehrere Anspritzdüsen (2) in mehrere Formnester (3) erfolgt, an die jeweils eine Reihe weiterer, durch Übergänge (7) verbundene Formnester (3) anschließen.

3. Verfahren nach einem der Ansprüche 1 oder 2, **dadurch gekennzeichnet, dass** das erste Formnest (3) über eine Anspritzdüse (2) angussfrei zentral angespritzt wird.

4. Verfahren nach einem der Ansprüche 1 oder 2, **dadurch gekennzeichnet, dass** das erste Formnest (3) über eine Anspritzdüse (2) angussfrei seitlich angespritzt wird.

5. Vorrichtung zur Herstellung von mehreren Spritzgussteilen aus fluiden Kunststoffen, die sich bei höheren Temperaturen verfestigen, oder aus vulkanisierenden, elastomeren Materialen, wie etwa Silikone oder Kautschuk, mit einer Form aus zumindest zwei korrespondierenden, zwischen einer geöffneten Stellung und einer geschlossenen Stellung beweglichen Formplatten (1), die mehrere Formnester (3) ausbilden, und mit mindestens einer Anspritzdüse (2) zum Einbringen von Kunststoff in ein Formnest (3), **dadurch gekennzeichnet, dass** die Formnester (3) bei geschlossenen Formplatten (1) durch düsenartige Übergänge (7) miteinander verbunden sind und dass eine verlorene Kavität (4) vorgesehen ist, die mit einem letzten Formnest (3) über einen weiteren Übergang (8) verbunden ist.

6. Vorrichtung nach Anspruch 5, **dadurch gekennzeichnet, dass** die verlorene Kavität (4) bei geschlossenen Formplatten (1) abgesehen vom weiteren Übergang (8) luftdicht abschlossen ist.

7. Vorrichtung nach einem der Ansprüche 5 oder 6, **dadurch gekennzeichnet, dass** der Übergang (7) zwischen zwei benachbarten Formnestern (3) und der Übergang (8) vom letzten Formnest (3) der Reihe zur verlorenen Kavität (4) einen Querschnitt aufweist, der etwa dem der Anspritzdüse entspricht.

8. Vorrichtung nach Anspruch 7, **dadurch gekennzeichnet, dass** der Übergang (7) zwischen zwei benachbarten Formnestern (3) und der Übergang (8) vom letzten Formnest (3) der Reihe zur verlorenen Kavität (4) abhängig von der Geometrie der Spritzgussteile, der Art der verwendeten Spritzgussmasse und den vorgegebenen Spritzgussbedingungen eine Breite von etwa 0,5 mm bis 5 mm, bevorzugt eine Breite von 0,5 mm bis 2 mm und insbesondere bevorzugt eine Breite von 0,9 mm bis 1,7 mm, eine Tiefe von 0,2 bis 0,01 mm, bevorzugt eine Tiefe von 0,06 mm bis 0,02 mm und eine Länge von 0,2 mm bis 0,01 mm, bevorzugt eine Länge von 0,06 mm bis 0,02 mm aufweist.

9. Vorrichtung nach einem der Ansprüche 5 bis 8, **dadurch gekennzeichnet, dass** die Anspritzdüse (2) zentral in ein Formnest gerichtet ist.

10. Vorrichtung nach einem der Ansprüche 5 bis 8, **dadurch gekennzeichnet, dass** die Anspritzdüse (2) seitlich in ein Formnest gerichtet ist.

11. Vorrichtung nach einem der Ansprüche 5 bis 10, **dadurch gekennzeichnet, dass** die Auflageflächen (5) zweier Formplatten (1) von freigestellten Flächen (6) umgeben sind, aus denen ein Teil des Formplattenmaterials beispielsweise durch Fräsung oder Senkerosion oder in anderer geeigneter Weise geringfügig abgetragen ist.

12. Vorrichtung nach einem der Ansprüche 5 bis 11, **dadurch gekennzeichnet, dass** die Formnester (3) durch Ausnehmungen in den Formplatten (1) gebildet sind, die für zwei benachbarte Formnester unterschiedlich tief ausgebildet sind.

13. Vorrichtung nach einem der Ansprüche 5 bis 12, **dadurch gekennzeichnet, dass** die einzelnen Formnester (3) in Serie seitlich versetzt zueinander angeordnet sind.

14. Vorrichtung nach einem der Ansprüche 5 bis 13, **dadurch gekennzeichnet, dass** mehrere Anspritzdüsen (2) vorgesehen sind, die in mehrere Formnester (3) münden, an die jeweils eine Reihe weiterer, durch Übergänge (7) verbundene Formnester (3) anschließen.
